# FASCICULE DE BREVET EUROPEEN

(11) **EP 3 820 774 B1**
(45) Date de publication et mention de la délivrance du brevet: **25.05.2022**
(21) Numéro de dépôt: 20734342.7
(22) Date de dépôt: 18.06.2020
(51) Int. Cl.: B64C 39/02

(54) **ENSEMBLE COMPORTANT UN VÉHICULE AUTOMOBILE DE LANCEMENT ET UN DRONE À RÉACTION ET PROCÉDÉ DE TRANSPORT ET DE LARGAGE D'UNE CHARGE**
ANORDNUNG MIT EINEM TRÄGERKRAFTFAHRZEUG UND EINER STRAHLBETRIEBENEN DROHNE SOWIE VERFAHREN ZUM TRANSPORTIEREN UND FREIGEBEN EINER LAST
ASSEMBLY COMPRISING A LAUNCH MOTOR VEHICLE AND A JET-POWERED DRONE AIRCRAFT, AND METHOD FOR TRANSPORTING AND RELEASING A LOAD

(30) Priorité: 18.06.2019 FR 1906516
(43) Date de publication de la demande: 19.05.2021
(73) Titulaire: DAE, 64500 Ciboure (FR)
(72) Inventeur: DEMONFORT, Thierry, 64500 Ciboure (FR); MICOLI, Christophe, 13009 Marseille (FR)
(74) Mandataire: Alatis
(86) Numéro de dépôt international: PCT/EP2020/066999
(87) Numéro de publication internationale: WO 2020/254512

(56) Documents cités:
- EP-A1- 3 233 632
- GB-A- 2 132 577
- US-A- 4 678 143
- US-A1- 2019 047 726
- US-B2- 7 665 691

## Description

### DOMAINE TECHNIQUE DE L'INVENTION

L'invention se rapporte au lancement d'un drone. Elle se rapporte également à l'acheminement d'une charge par voie aérienne jusqu'à une zone de largage.

### ETAT DE LA TECHNIQUE ANTERIEURE

On connaît des solutions de lancement de drones à partir de véhicules terrestres à l'arrêt ou en déplacement. Les drones concernés sont généralement de faible envergure et de faible masse, et propulsés par des hélices ne permettant pas d'atteindre des poussées importantes au décollage et des vitesses élevées dans les phases ultérieures de vol, comme illustré par exemple dans le document US 7,665,691 B2 ou dans le document US 2019/047726 Al. Les moyens connus ne permettent pas d'envisager le décollage de drones de masse et d'envergure plus importantes.

Ils ne permettent pas non plus d'optimiser le drone et son lanceur de façon à minimiser la consommation d'énergie du drone lors du décollage et lors des phases ultérieures de vol, dans le but de maximiser le rayon d'action ou la vitesse d'intervention.

### EXPOSE DE L'INVENTION

L'invention vise à remédier aux inconvénients de l'état de la technique et à proposer des moyens de lancement d'un drone de large envergure et/ou de masse élevée à partir du sol, dans le but d'accomplir une mission notamment de reconnaissance ou de largage d'une charge, la charge pouvant notamment comporter des équipements de sauvetage, des vivres, des munitions, des moyens de transmission, des armes ou un engin, rapidement et à distance de la zone de lancement. L'invention est défini par le texte des revendications.

Pour se faire est proposé un ensemble comportant un véhicule automobile de lancement et un drone, le véhicule automobile de lancement étant apte à rouler sur une piste de lancement pour dépasser un seuil de vitesse donné par rapport à une masse d'air environnante, le véhicule automobile de lancement étant pourvu d'une rampe de lancement coopérant avec le drone pour, dans une position de lancement et alors que le véhicule automobile roule sur la piste de lancement de manière à dépasser le seuil de vitesse donné par rapport à la masse d'air environnante, guider le drone en translation depuis une position de départ dans une direction de lancement vers l'avant du véhicule automobile de lancement, le drone comportant un ou plusieurs réacteurs et ne comportant pas de train d'atterrissage.

On entend ici par réacteur un moteur à réaction, notamment un turboréacteur. La propulsion du drone par un ou plusieurs réacteurs permet le transport d'une charge utile importante, avec une vitesse d'intervention élevée, avec un rayon d'action important.

En outre, le drone présente un fuselage et une voilure, l'une des conditions suivantes étant réalisées :
- la voilure a une envergure supérieure à une largeur de voie du véhicule automobile de lancement.
- le drone a une envergure supérieure à 2 mètres, et de préférence supérieure à 2,5 mètres, voire supérieure à 3 mètres,

La capacité de lancement à partir du véhicule automobile en mouvement contribue à la limitation de l'énergie devant être dépensée par le drone dans la phase de décollage, ce qui contribue également à une augmentation de la charge utile et du rayon d'action. Le véhicule automobile permet en outre de déplacer l'ensemble pour atteindre une zone optimale pour le lancement. Pour une mission de secours en mer, par exemple, le véhicule automobile peut être amené jusqu'à un point de la côte favorable compte tenu des vents, pour atteindre la zone cible de largage en un temps minimum.

L'absence de train d'atterrissage permet quant à elle une réduction du poids à vide et du volume du drone et une réduction significative de la traînée, ce qui concourt également à une augmentation de la charge utile et du rayon d'action. De plus, cette absence de train d'atterrissage permet une simplification mécanique qui limite les risques de défaillance.

Le véhicule automobile est de préférence un véhicule tout terrain, un véhicule militaire ou un véhicule spécifique, la rampe étant positionnée par exemple sur le toit du véhicule ou sur une plateforme prévue à cet effet. Un véhicule tout terrain permet le cas échéant un lancement à partir d'une piste non préparée, par exemple depuis une plage dans le cas d'un sauvetage en mer.

De préférence, une suspension active est disposée entre un châssis et des trains de roues du véhicule automobile, ou entre la rampe de lancement et le châssis du véhicule automobile ou entre un chariot et un rail de la rampe de lancement, pour stabiliser le drone.

Le cas échéant, le drone pourra être à géométrie variable, par exemple avec des ailes pliables, de sorte que la largeur de la voilure pour le transport soit plus étroite que pour le lancement et le vol.

Suivant un mode de réalisation, l'ensemble comporte en outre au moins un mécanisme de verrouillage, mobile entre une position de verrouillage pour fixer le drone par rapport à la rampe de lancement dans une position armée, et une position de déverrouillage autorisant un mouvement du drone par rapport à la rampe de lancement. En particulier, on peut prévoir que le dispositif d'accrochage soit pourvu d'un déclencheur, de préférence mécanique, électromécanique ou pyrotechnique, de préférence piloté pour ne pas se déclencher tant qu'une condition prédéterminée n'est pas réalisée, la condition prédéterminée étant l'une des conditions suivantes, ou une combinaison de plusieurs conditions parmi les conditions suivantes :
- le ou les réacteurs du drone délivrent une poussée au-dessus d'un seuil donné ;
- un effort exercé par le drone sur le dispositif d'accrochage est inférieur à un seuil donné ;
- le véhicule automobile a atteint ou dépassé le seuil de vitesse donné par rapport à la masse d'air environnante ;
- le véhicule automobile a atteint ou dépassé un seuil de vitesse au seul donné ;
- la rampe de lancement a une inclinaison donnée ou dans un secteur angulaire donné par rapport à l'horizontale ;
- la rampe de lancement a une inclinaison donnée ou dans un secteur angulaire donné par rapport à l'assiette du véhicule automobile.
- un ou ou plusieurs boucliers thermiques ou déflecteurs sont dans une position fonctionnelle ;
- un roulant escamotable de de reprise d'effort à l'arrière du véhicule est en position fonctionnelle.

Suivant un mode de réalisation, le véhicule automobile de lancement est pourvu d'un déflecteur apte, dans une position fonctionnelle, à dévier un jet d'air expulsé par le ou les réacteurs du drone, le déflecteur étant de préférence mobile entre la position fonctionnelle et une position de transport pour réduire la traînée du véhicule automobile de lancement dans l'air, le déflecteur en position fonctionnelle déviant le jet d'air de préférence vers le haut. Le déflecteur évite qu'un deuxième véhicule, qui suivrait le véhicule venant de procéder au largage, soit impacté. On peut ainsi envisager une colonne de véhicules se suivant à faible distance et larguant l'un après l'autre leur drone avant de quitter la colonne.

Le cas échéant, on peut également prévoir un déflecteur avant, faisant saillie vers l'avant depuis la plateforme de façon à protéger le parebrise du véhicule.

Le drone en position de départ a de préférence un centre de gravité dont la projection verticale, lorsque le véhicule circule en ligne droite sur une piste de lancement horizontale, est située dans un rectangle délimité par les zones de contact entre les roues du véhicule automobile et la piste de lancement, plus proche d'un plan vertical transversal médian entre un train de roues avant et un train de roue arrière du véhicule que du train de roues avant ou le train de roue arrière.

Suivant un mode de réalisation, la rampe de lancement est mobile entre la position lancement et une position de transport, pour réduire la traînée du véhicule automobile de lancement dans l'air. Avantageusement, la rampe de lancement est positionnée sur un toit du véhicule automobile de lancement, qui présente de préférence un capot arrière incliné permettant à une partie arrière en porte-à-faux de la rampe de lancement de s'abaisser lorsque la rampe de lancement passe de la position de transport à la position de lancement. De préférence, un passage de la position de transport à la position de lancement se traduit par une inclinaison de la rampe de lancement et/ou une extension de la rampe de lancement. Le cas échéant, la rampe peut être motorisée pour assurer le passage d'une position à l'autre. On peut prévoir que le passage ne soit possible qu'à l'arrêt. On peut également prévoir qu'il soit possible lorsque le véhicule automobile est en mouvement.

L'absence de train d'atterrissage permet, par rapport à un drone à train d'atterrissage fixe, de diminuer notablement la traînée du drone, et, par rapport à un drone à train d'atterrissage rétractable, une simplification technique considérable, qui s'accompagne d'une plus grande fiabilité et d'une diminution notable du poids à vide. L'absence de train d'atterrissage permet également d'autoriser des lancements de drone à partir de terrains sommaires et de s'affranchir de la nécessité de piste d'atterrissage et de décollage d'aérodromes.

Suivant un mode de réalisation, le drone est pourvu de patins pour glisser sur la rampe de lancement, notamment sur des rails ou dans des glissières de la rampe de lancement. Les patins, fixes et profilés, engendrent une traînée faible et facilement maîtrisable. Ils sont utilisés en interface avec la rampe lors du lancement et comme pieds lorsque le drone est au sol. Les patins sont de préférence constitués par des nervures faisant légèrement saillie du ventre du fuselage du drone, sur tout ou partie de la longueur du fuselage. Ces nervures s'étendent parallèlement à l'axe longitudinal du drone, et peuvent être situées dans deux plans parallèles à un plan longitudinal médian du fuselage ou dans deux plans faisant un angle avec le plan longitudinal médian du fuselage. Les patins sont de préférence au nombre de deux.

Suivant un autre mode de réalisation, un équipage mobile est guidé en translation le long de la rampe de lancement, et l'on prévoit des moyens pour solidariser le drone à l'équipage mobile jusqu'à ce que le drone arrive dans une position de décollage par rapport à la rampe de lancement, et libérer le drone de l'équipage mobile lorsque le drone atteint la position de décollage. L'équipage mobile reste lié à la rampe de lancement après le décollage du drone.

Suivant un mode de réalisation, le drone est équipé d'un parachute de récupération. Le parachute de récupération, logé de préférence dans une cavité du drone, est déployé pour la récupération du drone, en vue par exemple de son reconditionnement pour une nouvelle mission.

Le drone comporte un fuselage et une voilure. Le fuselage est de préférence pourvu d'une cavité permettant d'accueillir une charge. La cavité est de préférence ouverte sur le dos du fuselage, c'est-à-dire d'un côté du fuselage opposé au sol au moins dans les phases de lancement et de vol. L'ouverture peut le cas échéant être fermée par un couvercle largable ou éjectable. On peut en outre prévoir un dispositif d'obturation de la cavité après le largage de la charge, pour minimiser les turbulences lors de la phase de retour et de récupération du drone. Ce dispositif d'obturation est de préférence un dispositif léger, par exemple un volet roulant ou, de préférence, un sac gonflable qui peut être rapidement déployé et occupe tout ou partie de la cavité en obturant l'ouverture.

Une simplification supplémentaire est obtenue si le drone est équipé d'une avionique permettant un vol stabilisé sur le dos, pour une phase de largage de la charge logée dans la cavité du fuselage du drone. On évite ainsi un système de trappe, ce qui concourt à la simplicité, la légèreté et la fiabilité de l'ensemble.

De préférence, le ou les réacteurs auront une poussée suffisante pour assurer le décollage du drone lorsque le véhicule automobile a atteint ou dépassé la vitesse requise. Alternativement, on peut envisager la rampe de lancement est équipée d'un accumulateur d'énergie apte à libérer de façon impulsive une énergie préalablement accumulée pour catapulter le drone. L'accumulateur d'énergie peut être dimensionné pour permettre le décollage, en combinaison avec la poussée maximale des réacteurs et la vitesse du véhicule. Il peut également être dimensionné pour permettre le décollage en combinaison avec la poussée maximale des réacteurs avec le véhicule à l'arrêt.

Suivant un mode de réalisation, l'accumulateur d'énergie comporte un ou plusieurs accumulateurs d'énergie pneumatique, constitués par des réservoirs de gaz sous pression, notamment d'air comprimé, dont la détente à l'air libre ou dans une chambre à volume variable d'un vérin pneumatique génère un travail mécanique de catapultage du drone.

De préférence, le ou les accumulateurs d'énergie sont intégrés à un actionneur qui peut moduler en temps réel le débit en sortie du ou des accumulateurs d'énergie, et ainsi l'énergie cinétique transférée au drone, durant la phase de lancement. La loi de modulation peut notamment imposer que la poussée instantanée sur le drone reste inférieure à un seuil donné, à tout instant pendant la phase de lancement.

Suivant un autre aspect de l'invention, celle-ci a trait à un procédé de transport et de largage d'une charge, comportant un lancement d'un drone porteur de la charge, puis un vol du drone jusqu'à une zone de largage, suivi d'un largage de la charge depuis le drone en vol, puis d'un vol du drone jusqu'à une zone de récupération, mis en œuvre de préférence par l'ensemble tel que précédemment défini. Pour le lancement, un véhicule automobile de lancement portant le drone roule sur une piste de lancement de manière à dépasser un seuil de vitesse donné par rapport à une masse d'air environnante, et le drone est guidé par une rampe de lancement équipant le véhicule automobile de lancement depuis une position de départ dans une direction de lancement vers l'avant du véhicule automobile de lancement, le drone est propulsé, durant le lancement et au moins une partie du vol vers la zone de largage et/ou du vol jusqu'à la zone de récupération au moins partiellement par un ou plusieurs réacteurs du drone, et le drone ayant atteint la zone de récupération déploie un parachute de récupération, et se pose sur aire de récupération sans train d'atterrissage.

Le pilotage du drone dans la phase de décollage peut être effectué à partir du véhicule, de façon préprogrammée avec des équipements avioniques dédiés ou de façon indépendante par un opérateur à distance.

De préférence, le largage de la charge comporte un retournement du drone sur le dos, puis, par gravité, une sortie de la charge d'une cavité du drone volant sur le dos, puis, de façon préférentielle, un déploiement d'un parachute de ralentissement de la charge en chute libre.

### BREVE DESCRIPTION DES FIGURES

D'autres caractéristiques et avantages de l'invention ressortiront à la lecture de la description qui suit, en référence aux figures annexées, qui illustrent :
la figure 1, une vue de côté d'un ensemble selon un premier mode de réalisation de l'invention, comportant un véhicule automobile et un drone, dans une position de transport ;
la figure 2, une vue de face de l'ensemble de la figure 1, dans la position de transport ;
la figure 3, une vue de derrière de l'ensemble de la figure 1, dans la position de transport ;
la figure 4, une vue de côté de l'ensemble de la figure 1, dans une première phase de déploiement d'une rampe de lancement du drone ;
la figure 5, une vue de côté de l'ensemble de la figure 1, dans une deuxième phase de déploiement de la rampe de lancement du drone ;
la figure 6, une vue de côté de l'ensemble de la figure 1, dans une troisième phase de déploiement de la rampe de lancement du drone ;
la figure 7, l'ensemble de la figure 1, dans une phase de lancement du drone ;
la figure 8, une vue de dessous de la rampe de lancement et du drone dans la position de la figure 4 ;
la figure 9, une vue de dessous de la rampe de lancement et du drone, dans la position de la figure 6 ;
la figure 10, une vue de dessous de la rampe de lancement et du drone, dans la position de la figure 7 ;
la figure 11, une vue de détail de deux portions d'un rail de la rampe de lancement dans d'extension maximale de la rampe de lancement, avant l'arrivée dans la position de la figure 9 ;
la figure 12, une vue de détail des deux portions du rail de la figure 11, dans la position de la figure 9 ;
la figure 13, une vue d'un mécanisme destiné à déplacer les portions du rail de la figure 11, de la position de la figure 11 à la position de la figure 12, le mécanisme ayant été omis des figures précédentes pour en simplifier la lecture ;
la figure 14, une vue de côté du drone et d'un équipage mobile de liaison entre le drone et la rampe de lancement, à l'extrémité avant de la rampe de lancement dans la position de la figure 7 ;
la figure 15, une vue de face du drone et de l'équipage mobile de liaison entre le drone et la rampe de lancement ;
la figure 16, un détail de la figure 15 permettant de visualiser un mécanisme de verrouillage du drone par rapport à l'équipage mobile ;
la figure 17, une vue de dessous de l'équipage mobile et d'un mécanisme de verrouillage de l'équipage mobile par rapport à la rampe de lancement dans la position de départ des figures 5 et 6 ;
la figure 18, une vue de dessous de l'équipage mobile à une extrémité avant de la rampe de lancement, et d'un mécanisme de libération pour libérer le mécanisme de verrouillage entre l'équipage mobile et le drone dans la position de la figure 7 ;
la figure 19, une vue de dessous de la rampe de lancement et du drone dans la position de la figure 4, selon une variante constituant un deuxième mode de réalisation de l'invention ;
la figure 20, une vue de dessous de la rampe de lancement et du drone selon le deuxième mode de réalisation de l'invention, dans la position de la figure 5;
la figure 21, une vue de face du drone et d'un équipage mobile de liaison entre le drone et la rampe de lancement, suivant une variante constituant un troisième mode de réalisation de l'invention ;
la figure 22, un détail de la figure 21 permettant de visualiser un mécanisme de verrouillage du drone par rapport à l'équipage mobile ;
la figure 23, une vue de dessous de l'équipage mobile de la figure 21 à une extrémité avant de la rampe de lancement, et d'un mécanisme de libération pour libérer le mécanisme de verrouillage entre l'équipage mobile et le drone dans la position de la figure 7 ;
la figure 24, une vue de face du drone et d'une liaison entre le drone et la rampe de lancement suivant une variante constituant un quatrième mode de réalisation de l'invention ;
la figure 25, un schéma de différentes phases d'une mission de transport et de largage d'une charge au moyen de l'ensemble selon les figures 1 à 4, après le lancement du drone suivant les phases de lancement des figures 4 à 7;
la figure 26, une vue en coupe axiale d'un actionneur à accumulation d'énergie pneumatique, intégré à une catapulte pour lancer l'équipage mobile et le drone sur la rampe de lancement lors de la phase de lancement du drone illustrée sur la figure 7, dans une première position de modulation d'un effort de catapultage ;
la figure 27, une vue en coupe axiale de l'actionneur de la figure 26, dans une deuxième position de modulation ;
la figure 28, une vue en coupe axiale d'un actionneur à accumulation d'énergie pneumatique constituant une alternative à l'actionneur de la figures 26, dans une première position de modulation ;
la figure 29, une vue en coupe axiale de l'actionneur de la figure 28, dans une deuxième position de modulation ;
la figure 30, une vue en coupe axiale d'un actionneur à accumulation d'énergie pneumatique constituant une alternative aux actionneurs des figures 26 à 29, dans une première position de modulation ;
la figure 31, une vue en coupe transversale de l'actionneur de la figure 30, dans la première position de modulation ;
la figure 32, une vue en coupe transversale de l'actionneur de la figure 30, dans une deuxième position de modulation ;
la figure 33, une vue en coupe axiale d'un actionneur à accumulation d'énergie pneumatique constituant une alternative aux actionneurs des figures 26 à 32 ;
la figure 34, une vue en coupe axiale d'un actionneur à accumulation d'énergie pneumatique constituant une alternative aux actionneurs des figures 26 à 33 ;
la figure 35, une vue en coupe axiale d'un actionneur à accumulation d'énergie pneumatique comportant un déclencheur qui peut également être mis en œuvre en option dans les actionneurs des figures 26 à 34, dans une position avant déclenchement ;
la figure 36, une vue en coupe axiale de l'actionneur de la figure 35, dans une position après déclenchement ;
la figure 37, une vue en coupe axiale d'un actionneur télescopique, présentant un mécanisme télescopique qui peut être également intégré aux actionneurs des figures 26 à 36, dans une position rétractée ;
la figure 38, une vue en coupe axiale de l'actionneur télescopique de la figure 37, dans une position déployée ;
la figure 39, une vue en coupe axiale d'un actionneur à accumulation d'énergie pneumatique constituant une alternative aux actionneurs des figures 26 à 38.

Pour plus de clarté, les éléments identiques ou similaires sont repérés par des signes de référence identiques sur l'ensemble des figures.

### DESCRIPTION DÉTAILLÉE DE MODES DE RÉALISATION

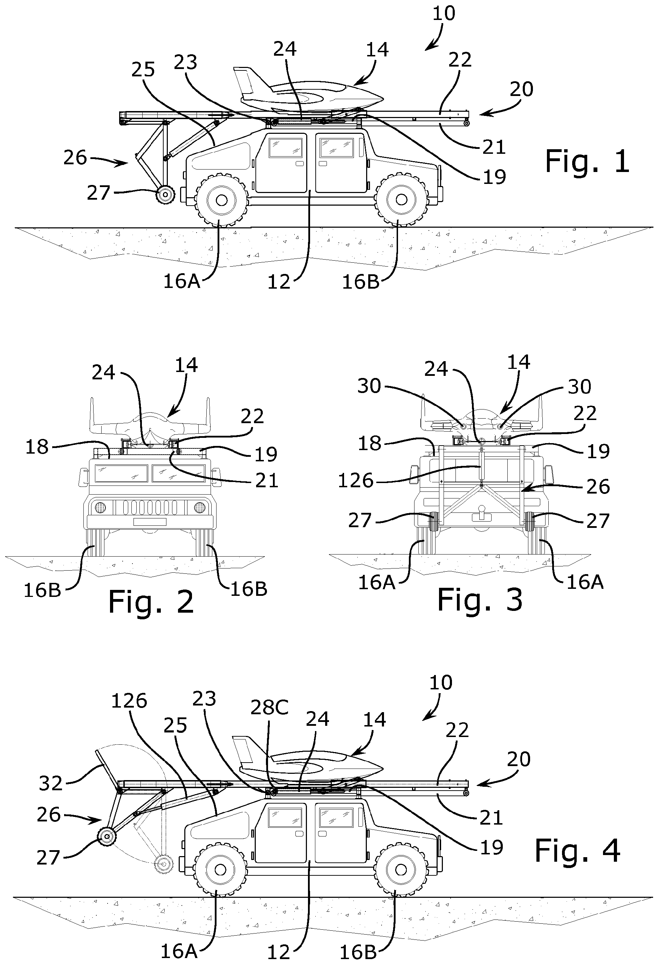

Sur les figures **1** à **3** est illustré un ensemble **10** comportant un véhicule automobile de lancement **12** et un drone **14.** Le véhicule automobile **12** est apte à circuler à vive allure sur des pistes aménagées ou goudronnées, et de préférence également sur des pistes non aménagées et non goudronnées. Le véhicule automobile **12** ici représenté est un véhicule utilitaire tout terrain léger à quatre roues **16A, 16B,** mais un véhicule automobile d'un autre type est également envisageable.

Le véhicule automobile **12** est équipé, sur son toit **18,** d'un châssis fixe **19** supportant une rampe de lancement **20** à laquelle le drone **14** est attelé. La rampe de lancement **20** est ici constituée notamment par un châssis mobile **21** supportant deux rails parallèles **22** pour guider le drone **14** sur une trajectoire rectiligne de lancement.

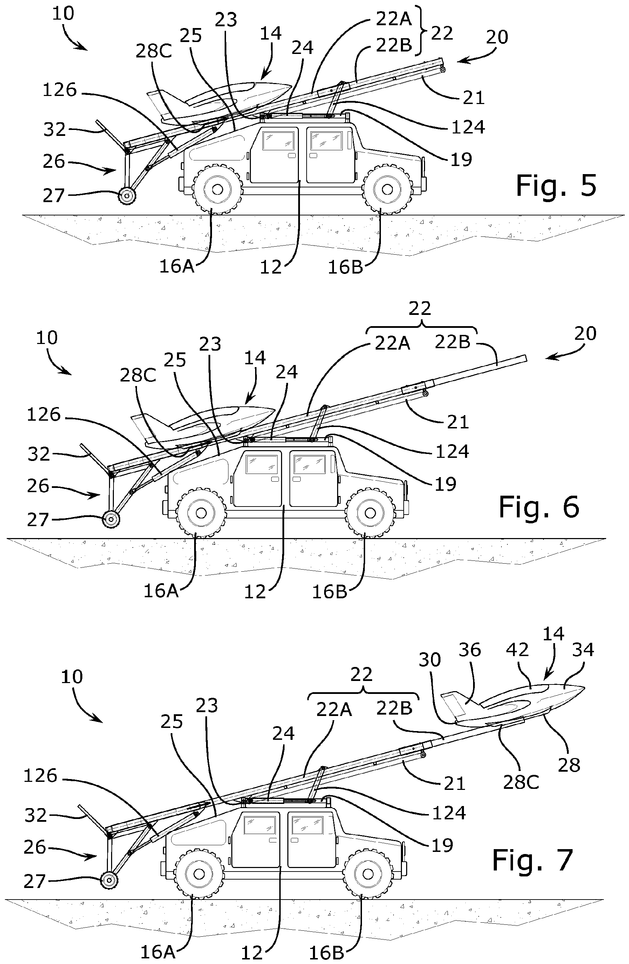

La rampe de lancement **20** est de préférence mobile par rapport au châssis fixe **19** entre une position de transport, illustrée sur la figure **1****,** et une position de lancement illustrée sur les figures **6** et **7**, en passant par diverses phases de déploiement, illustrées sur les figures **4** à **6**. En pratique, le châssis mobile **21** de la rampe de lancement est articulé au châssis fixe **19** monté sur le toit **18** du véhicule automobile **12** par l'intermédiaire d'une charnière **23**, pour pivoter autour d'un axe de pivotement transversal horizontal. En position de lancement (et de préférence en position de transport), le drone **14** pointe vers l'avant du véhicule automobile **12.** En position de transport, la rampe de lancement **20** est positionnée horizontalement, pour réduire le coefficient de traînée du véhicule automobile **12** dans l'air.

Le passage de la position de transport à la position de lancement est effectué par pivotement de la rampe de lancement **20** autour de l'axe de pivotement transversal horizontal défini par la charnière **23**, à l'aide d'un vérin **24** hydraulique, pneumatique ou électromécanique.

Le vérin **24** peut être disposé directement entre le châssis fixe **19** et la rampe de lancement **20**. Alternativement, on peut prévoir, comme illustré sur les figures **5** à **7**, un vérin **24** fixé au châssis fixe **19** et entraînant un mécanisme **124** de transmission du mouvement du vérin **24** à la rampe de lancement **20**, qui assure qu'en position de lancement, les efforts appliqués à la rampe de lancement **20** ne sont que peut pas transmis au vérin **24**. On peut par exemple prévoir une bielle **124** dont une extrémité est articulée à une tige du vérin **24** et est guidée en translation parallèlement à l'axe horizontal de la tige du vérin **24**, et dont l'autre extrémité est articulée au châssis mobile **19** ou à une traverse reliant les deux rails **22** de la rampe de lancement **20**. L'angle entre la bielle **124** et le vérin **24** a été représenté comme un angle obtus sur les figures **5** à **7**, mais peut le cas échéant être un angle droit, pour réduire davantage, voire annuler les efforts transmis par la rampe de lancement **20** au vérin **24** en position de lancement, voire un angle aigu, ce qui permet, en prévoyant une butée de fin de course pour la tige du vérin **24**, de reprendre intégralement les efforts exercés par la rampe **20** sur la bielle **124** au niveau de la butée de fin de course.

L'axe de pivotement de l'articulation **23** se situe de préférence dans le rectangle de sustentation du véhicule automobile **12**, c'est-à-dire entre le train de roue arrière **16A** et le train de roue avant **16B** du véhicule automobile, et à distance des extrémités longitudinales de la rampe de lancement **20**, de sorte que lorsque cette dernière s'incline, une extrémité arrière de la rampe de lancement **20** s'abaisse alors qu'une extrémité avant de la rampe de lancement **20** s'élève. Le véhicule automobile **12** peut avantageusement présenter un capot arrière **25** incliné permettant à l'extrémité arrière en porte-à-faux de la rampe de lancement **20** de s'abaisser lorsque la rampe passe de la position de transport à la position de lancement.

La rampe de lancement **20** peut le cas échéant être équipée d'un train roulant **26** escamotable, articulé à proximité de l'extrémité arrière de la rampe de lancement **20** et entraîné par un vérin **126**, pour passer d'une position escamotée illustrée sur la figure **1** à une position déployée illustrée sur la figure **4**. Le train roulant escamotable **26** comporte au moins une, et de préférence deux roues **27** qui, dans la position inclinée de la rampe **20** illustrée sur les figures **5** à **7**, peuvent être positionnées à faible distance du sol, ou, suivant une variante non illustrée, peuvent rouler sur le sol.

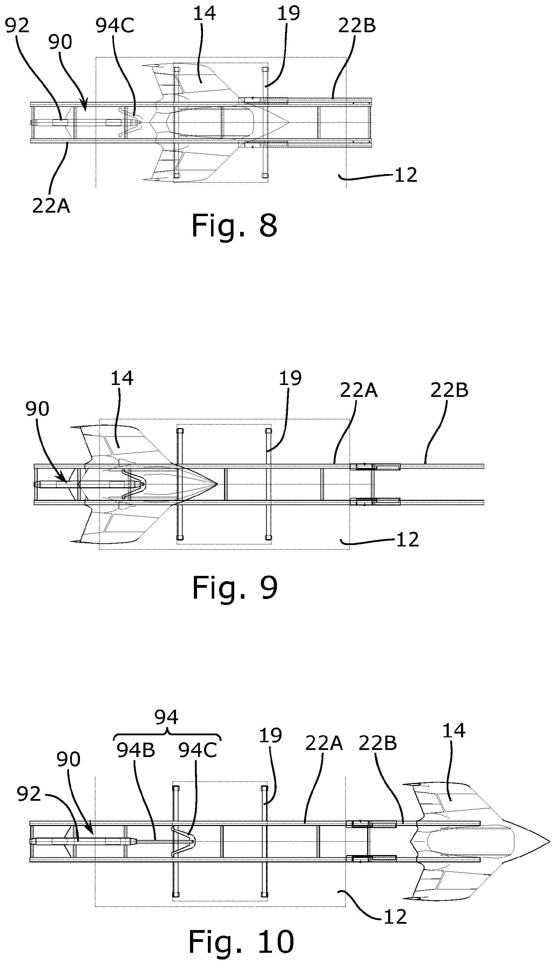

Comme illustré en détail sur les figures **8** à **10**, les rails **22** de la rampe de lancement **20** sont de préférence en au moins deux parties **22A**, **22B** mobiles l'une par rapport à l'autre, de manière à permettre une extension de la partie avant de la rampe de lancement **20** en position de lancement (figures **6**, **7**, **9** et **10**) et une rétractation en position de transport (figures **1** et **8**).

De préférence, la partie arrière **22A** des rails est fixe par rapport au châssis mobile **21**, ou ne forme qu'une pièce avec le châssis mobile **21**, de façon à pivoter autour de l'axe de l'articulation **23**, et reliée au vérin **24**, par exemple par l'intermédiaire de la bielle **124**, comme illustré sur les figures **5** à **7**. Une partie avant **22B** des rails est quant à elle mobile par rapport à la partie arrière **22A** de manière à être rétracté en position de transport et déployé en position de lancement.

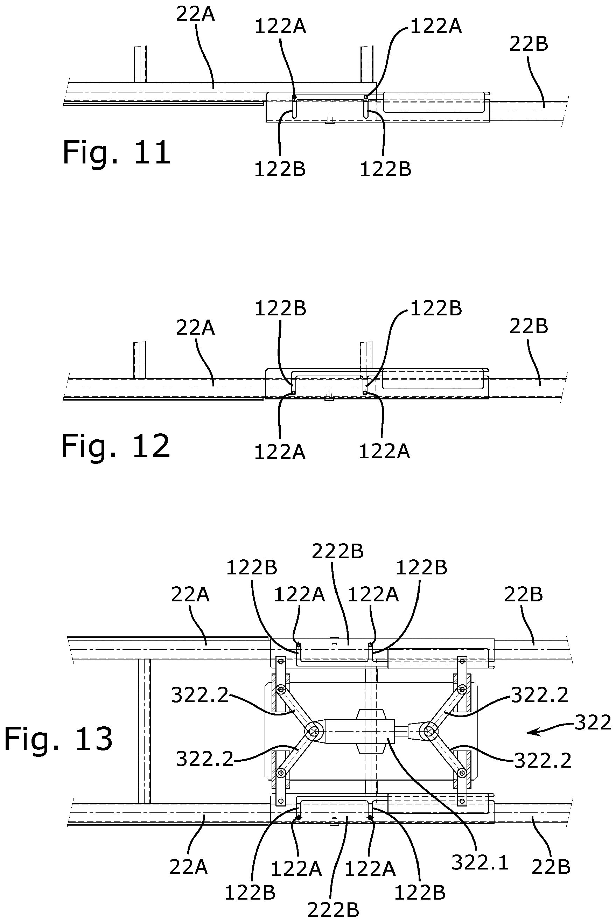

Les parties arrière **22A** et avant **22B** de chaque rail sont placées côte à côte dans la position de transport, comme illustrée sur la figure **8**. Le mouvement de la partie avant **22B** des rails est un mouvement de translation longitudinale, guidé par le châssis mobile **21** et/ou la partie arrière **22A** des rails, jusqu'à une position d'extension maximale illustrée sur la figure **11**. Pour aligner et verrouiller la partie avant **22B** des rails avec la partie arrière **22A**, la partie avant **22B** est déplacée transversalement, permettant à des pions de verrouillage **122A** solidaires de l'extrémité avant de la partie arrière **22A** de venir s'insérer dans des fentes de verrouillage complémentaires **122B** formées à l'extrémité arrière **222B** de la partie avant **22B** des rails, comme illustré sur les figures **9** et **12**. Ce mouvement de verrouillage peut le cas échéant être effectué par un opérateur, ou de préférence par un mécanisme optionnel **322** illustré sur la figure **13**, comportant un vérin **322.1** lié à l'extrémité arrière **222B** de la partie avant **22B** des rails par des bielles **322.2.**

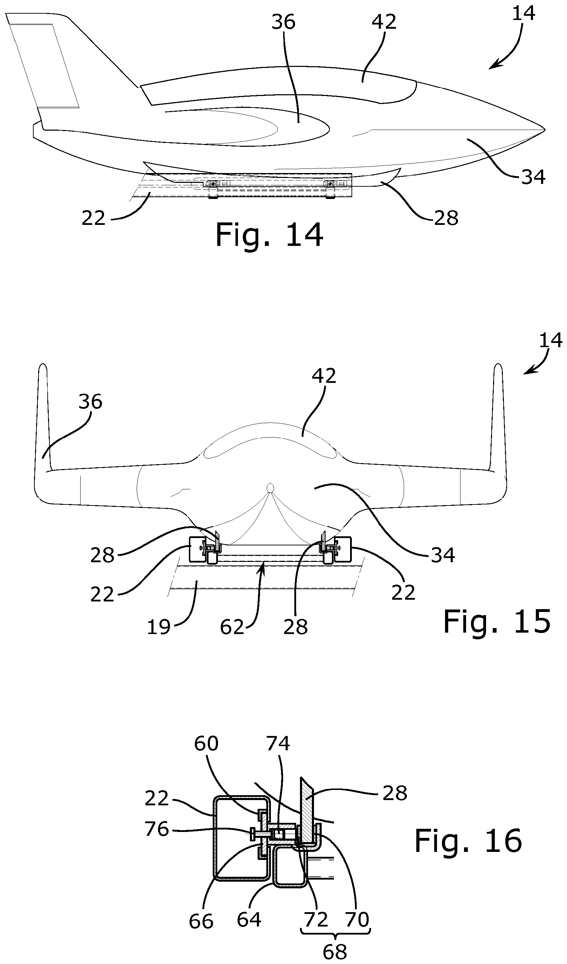

Chaque partie de rail **22A**, **22B** est un profilé creux à l'intérieur duquel est formée une glissière **60** illustrée sur la figure **16****.** En position de lancement, les deux parties **22A**, **22B** de chaque rail **22** sont parfaitement alignées, et les glissières **60** des deux parties **22A**, **22B** d'un même rail **22** sont dans le prolongement l'une de l'autre sans discontinuité. La liaison entre le drone **14** et la rampe de lancement **22** est réalisée, dans ce premier mode de réalisation, par l'intermédiaire d'un équipage mobile **62** illustré sur les figures **14** à **18****,** et volontairement omis sur les figures précédentes pour en simplifier la lecture. L'équipage mobile **62** comporte un châssis **64** de forme générale rectangulaire, deux patins latéraux **66** glissant dans les glissières formées à l'intérieur des deux rails **22** parallèles de la rampe de lancement **20**, et quatre pinces **68**, qui viennent pincer deux pieds **28** du drone, formés chacun par une nervure longitudinale parallèle à l'axe principal du fuselage et faisant saillie sous le ventre du fuselage, à distance du plan de symétrie principal du fuselage. Chaque pince **68** comporte une mâchoire fixe **70** et une mâchoire mobile **72** rappelée vers une position de pincement par un ressort de rappel **74**, et solidaire d'un doigt **76** de retrait.

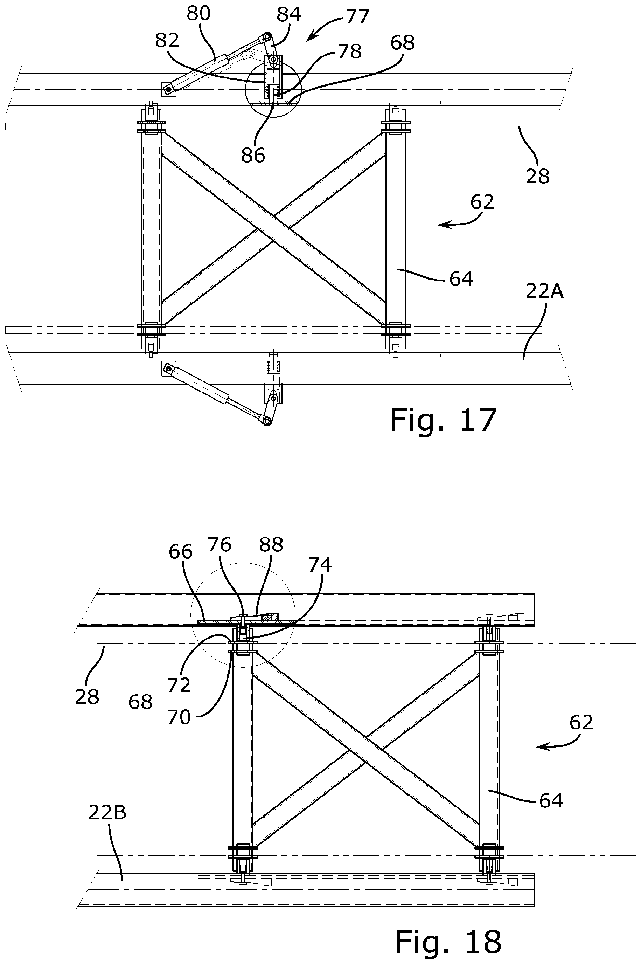

L'équipage mobile **62** est libre de translater par rapport à la rampe de lancement **20** lorsque les patins **66** coulissent dans les glissières **60.** On prévoit toutefois des mécanismes de verrouillage dans deux positions prédéfinies, à savoir dans la position de transport de la figure **1**, et dans la position armée des figures **5** et **6**, en retrait par rapport à la position de transport vers l'arrière de la rampe de lancement **20**. On a illustré sur la figure **17** le mécanisme de verrouillage **77** pour le verrouillage dans la position de transport, qui comporte, pour chaque rail **22**, un pêne de verrouillage **78** commandé par un actionneur **80**. À titre d'exemple, le pêne de verrouillage **78** peut être guidé en translation transversale, et rappelé vers une position de déverrouillage par un ressort de rappel **82**, l'actionneur **80** étant ici un vérin relié au pêne de verrouillage **78** par un levier **84**. Le pêne de verrouillage **78** en position de verrouillage est logé dans un alésage constituant une gâche **86**, formé dans le patin correspondant **66** de l'équipage mobile **62**. Le mécanisme de verrouillage identique est prévu pour la position armée des figures **5** et **6**.

Dans la position de transport de la figure **1**, et les phases de lancement illustrées sur les figures **5** et **6**, jusqu'à l'arrivée dans la position de la figure **7**, les pinces **68** sont fermées, assurant la fixation du drone **14** à l'équipage mobile **62.** À l'arrivée dans la position de la figure **7**, les têtes des doigts de retrait **76** viennent en prise avec des cames **88** formées à l'extrémité avant des parties de rail avant **22B** et illustrées sur la figure **18**, de sorte que les mâchoires mobiles **72** s'ouvrent, libérant le drone **14**.

De façon remarquable, le drone **14** est un drone à réaction, comportant un ou plusieurs réacteurs **30** lui conférant une poussée importante, par exemple un ou deux réacteurs délivrant chacun une poussée supérieure à 400 Newtons, de préférence supérieure à 600 N. Si plusieurs réacteurs sont prévus, la puissance de chacun est de préférence suffisante pour permettre un vol en mode dégradé. Le véhicule automobile **12** est pourvu d'un déflecteur **32** apte, dans une position fonctionnelle illustrée sur les figures **5** à **7**, à dévier un jet d'air expulsé par le ou les réacteurs **30** du drone **14**, de préférence vers le haut. De préférence, le déflecteur **32** est mobile entre la position fonctionnelle des figures **5** à **7** et la position de transport illustrée sur la figure **1**, pour améliorer la pénétration du véhicule automobile **12** dans l'air. Le cas échéant, le déploiement du déflecteur **32** et celui du train de roues **26** peuvent être simultanés et effectués par le même actionneur **126**.

Le drone **14** comporte un fuselage **34** et une voilure **36**, la voilure ayant de préférence une envergure supérieure à 2 mètres, et de préférence supérieure à 2,5 mètres, de sorte que l'envergure est potentiellement supérieure la largeur de voie du véhicule **12**. Suivant une variante non illustrée, la voilure est à géométrie variable, pour être repliée en position de transport afin de minimiser la largeur hors tout de l'ensemble, et déployée pour le lancement.

Le cas échéant, on peut prévoir d'équiper la rampe de lancement **20** d'une catapulte **90** illustrée les figures **8** à **10**. Une telle catapulte **90** comporte un actionneur **92** qui peut comporter un accumulateur d'énergie apte à libérer de façon impulsive une énergie préalablement accumulée pour accélérer le drone **14** depuis la position armée de la figure **5** vers la position de libération de la figure **7**. L'accumulateur d'énergie est de préférence un accumulateur d'énergie potentielle élastique (un mécanisme à ressort) ou d'énergie chimique (un dispositif pyrotechnique), voire un accumulateur d'énergie pneumatique. De préférence, l'actionneur **92** agit sur un organe de transmission **94** guidé en translation pour transmettre l'énergie cinétique libérée par l'accumulateur d'énergie **92** au drone **14**. Sur les figures l'actionneur **92** est un dispositif pyrotechnique, et l'organe de transmission **94** est constitué par un piston lié à une tige **94B** elle-même liée à une tête **94C**, venant en appui contre un épaulement arrière **28C** (visible sur les figures **4** et **7**) des patins **28**. On peut également envisager d'assister le lancement par une roquette, dont le drone **14** se sépare après le décollage.

Pour lancer le drone **14** à partir de la position de transport de la figure **1**, on déploie tout d'abord le train de roulement **26** et le déflecteur **32** dans la position de la figure **4**, puis on fait pivoter la rampe de lancement **20** vers la position de la figure **5****,** en libérant le mécanisme de verrouillage **77** qui maintenait l'équipage mobile **62** et le drone **14** par rapport à la rampe de lancement **20** dans la position de transport. Le drone, entraîné par son poids, recule sur la rampe de lancement **20** jusqu'à atteindre la position illustrée sur la figure **5** en appui contre la tête **94C** de la catapulte **90**. Le mécanisme de verrouillage **77** correspondant à cette position vient verrouiller l'équipage mobile **62** et le drone dans la position armée. On déploie la partie avant **22B** des rails **22** de la rampe de lancement **20** dans la position illustrée sur la figure **6****.** Les phases de déploiement des figures **4****,** **5** et **6** peuvent se dérouler à l'arrêt, le cas échéant manuellement, ou être automatisée, et le cas échéant réalisées alors que le véhicule automobile **12** roule. L'ordre des opérations peut également varier : en particulier, le déploiement de la partie avant **22B** des rails **22** peut être effectuée alors que la rampe de lancement **20** est encore horizontale.

Au plus tard à l'issue du déploiement de la partie avant **22B** des rails **22**, le véhicule automobile est amené à une vitesse dépassant un seuil prédéterminé par rapport à la masse d'air environnante, pour procéder au lancement proprement dit du drone **14**. Les réacteurs **30** du drone **14** sont alimentés à pleine puissance ou au moins à une puissance supérieure à un seuil prédéterminé fonction des conditions de vent et de chargement. Enfin, l'actionneur **80**, qui est de préférence un actionneur électromagnétique, libère le mécanisme de verrouillage **77** bloquant l'équipage mobile **62**, alors que simultanément l'accumulateur d'énergie **92** de la catapulte **90** est déclenché, de sorte que le drone, entraîné par la catapulte **90** et les réacteurs **30**, avance sur la rampe de lancement **20**, toujours lié à l'équipage mobile **62**. En arrivant à l'extrémité avant de la rampe de lancement, les cames **88** ouvrent les pinces **68** qui libèrent le drone qui prend son envol. Le cas échéant, le train roulant **26** contribue à la stabilité du véhicule automobile **12** lors du lancement, en reprenant notamment les efforts de recul de la catapulte **90**.

La catapulte **90** est optionnelle si de dimensionnement des réacteurs **30** est suffisant pour assurer le décollage. Le cas échéant, la catapulte **90** peut permettre de lancer le drone **14** alors que le véhicule automobile **12** n'a pas atteint une vitesse suffisante pour permettre le décollage à l'aide des seuls réacteurs **30**, ou peut permettre de limiter la durée d'alimentation des réacteurs **30** à pleine puissance, ce qui accroit le rayon d'action. Si l'énergie emmagasinée par la catapulte **90** est suffisante, le lancement peut également être initié alors que le véhicule automobile **12** est à l'arrêt.

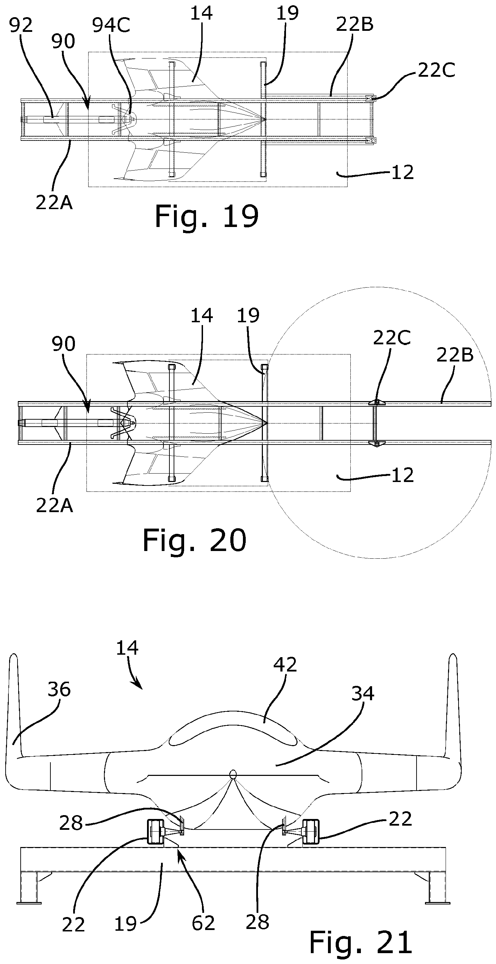

Selon la variante de réalisation des figures **19** et **20**, la partie avant **22B** des rails **22** de la rampe de lancement **20** est liée à la partie arrière **22A** par une articulation **22C**, qui permet un déploiement de la partie avant **22B** par pivotement depuis la position repliée illustrée sur la figure **19** jusqu'à la position déployée de la figure **20**. Ce déploiement peut avantageusement être effectué alors que la rampe de lancement **20** est encore horizontale. Il peut naturellement être motorisé.

Suivant la variante de réalisation des figures **21** à **23**, l'équipage mobile **62** est constitué par quatre galets **166** indépendants, qui viennent rouler, suivant les conditions de portance durant la phase de lancement, alternativement sur des pistes de roulement supérieures **160** ou des pistes de roulement inférieures **260** formées à l'intérieur des rails **22**. Chaque galet **166** pivote sur un axe qui forme un doigt **176**, dont une extrémité libre est engagée dans un alésage **276** formée d'un pied correspondant **28** du drone **14**, pour lier le drone **14** au galet **166**.

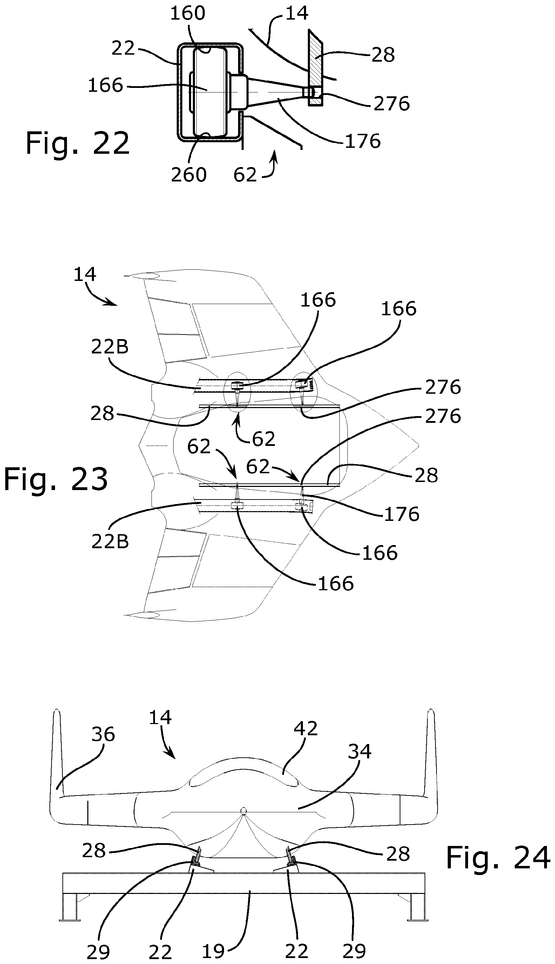

À l'extrémité avant des parties avant **22B** des rails **22**, une légère déviation des pistes de roulement **160**, **260** permet de dégager les doigts **176** et de libérer le drone **14** pour son envol, comme illustré sur la figure **23**.

Suivant la variante de réalisation de la figure **24**, les pieds **28** du drone **14** forment des patins qui glissent dans des glissières **29** des rails **22** de la rampe de lancement **20,** les glissières **29** étant orientées de manière à former ensemble ou chacune une liaison ne laissant au drone **14** qu'un degré de liberté de translation par rapport à la rampe de lancement **20**. Les glissières **29** peuvent avantageusement être équipées d'un revêtement limitant les frottements, ou de galets (non illustrés) sur lesquels les patins **28** roulent. Le drone **14** se sépare de la rampe de lancement **20** à son extrémité lorsque les patins **28** se libèrent des glissières **29**.

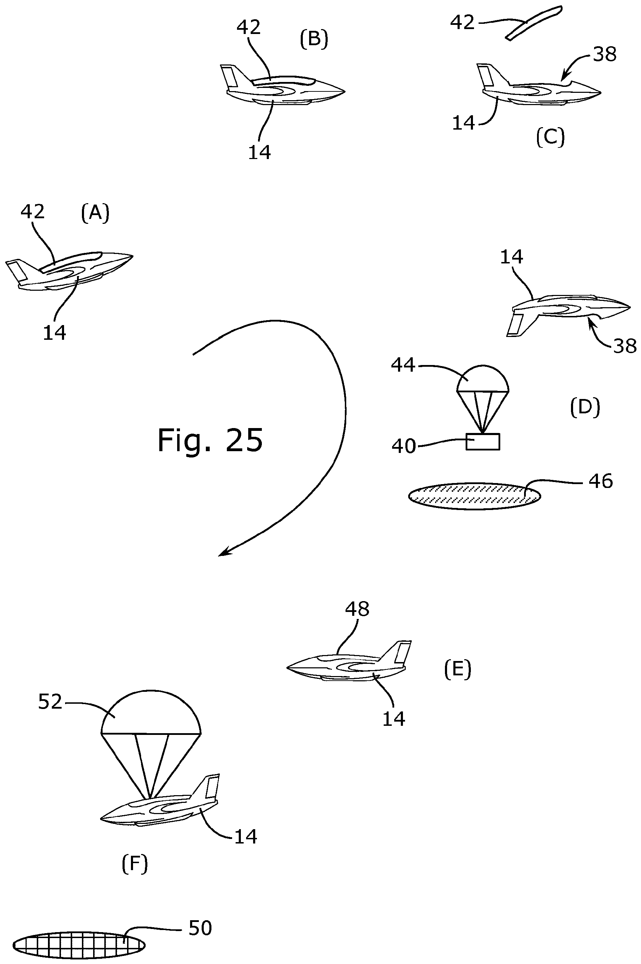

Le fuselage **34** du drone **14** comporte une cavité de transport **38** d'une charge **40**, qui est de préférence une charge destinée à être larguée. La cavité de transport **38** est de préférence ouverte sur le dos du fuselage, c'est-à-dire d'un côté du fuselage opposé au sol au moins dans les phases de décollage (figure **25**, **A**) et de vol (figure **25**, **B**). La cavité de transport **38** peut le cas échéant être fermée par un capot éjectable ou largable **42**, pour optimiser la finesse du fuselage **34**. Pour minimiser le poids à vide et limiter les risques de défaillance, on choisit volontairement une structure de fuselage simplifiée, ne comportant pas de trappe articulée pour larguer la charge **40**. On prévoit donc, pour assurer le largage de la charge **40** en vol, un une éjection du capot **42** (figure **25****, C**), puis le retournement du drone **14** sur le dos et le largage de la charge **40** (figure **25****, D**). Le largage de la charge **40** peut le cas échéant s'accompagner du déploiement du parachute **44** de ralentissement de la charge **40**, lui permettant d'atteindre sans encombre la zone cible **46**. Le cas échéant, le drone peut être équipé d'un dispositif d'obturation **48**, par exemple un sac gonflable ou un volet roulant, qui vient se déployer de manière à remplir la cavité, ou au moins à refermer l'ouverture, et à reconstituer une continuité avec les parois du fuselage lors de la poursuite du vol (figure **25**, **E**), après le largage, vers une zone de récupération **50** du drone.

De manière remarquable, le drone **14** ne comporte pas de train d'atterrissage, ce qui contribue à sa faible traînée. Pour assurer son atterrissage, le drone **14** est équipé d'un parachute de récupération **52** qui est apte à se déployer à l'arrêt des réacteurs **30** lors de l'arrivée dans la zone de récupération **50** (figure **25****, F**).

On peut ainsi décomposer un cycle d'utilisation du drone **14** de la manière suivante :
- une phase de lancement (figures **5** à **7**) et de décollage (figure **25****, A**), depuis le véhicule automobile **12** roulant sur une piste de lancement au-dessus d'un seuil de vitesse donné par rapport à une masse d'air environnante, phase durant laquelle le drone **14** est propulsé par son ou ses réacteurs **30**, le cas échéant assistés par une catapulte, et guidé par la rampe de lancement **20** depuis une position de départ dans une direction de lancement vers l'avant du véhicule automobile **12,**
- une phase de vol (figure **25****, B**) propulsé par les moteurs à réaction **30** jusqu'à une zone de largage **46**,
- le cas échéant, l'éjection ou le largage du capot **42** (figure **25****, C**),
- puis le retournement du drone **14** sur le dos et le largage de la charge **40** par gravité (figure **25****, D**), avec le cas échéant déploiement d'un parachute de ralentissement **44** de la charge mise en œuvre automatiquement ou de manière retardée,
- le retournement du drone **14** sur le ventre (figure **25****, E**) pour une phase de vol du drone, avec éventuellement obturation de la cavité **38** par un dispositif d'obturation **48** jusqu'à une zone de récupération,
- l'arrêt ou ralentissement significatif des moteurs à réaction **30** et le déploiement du parachute de récupération **52**, pour poser le drone sur le ventre, sans train d'atterrissage, sur une aire de récupération **50** (figure **25**, **F**).

En variante, la phase de lancement peut avoir lieu à l'arrêt, l'énergie cinétique de départ étant obtenue en combinant les réacteurs **30** et la catapulte **90**, si celle-ci est suffisamment puissante.

En variante, la cavité de transport **38** est ouverte non pas sur le dos du fuselage, mais sur le ventre, et fermée par un capot **40** qui est disposé entre les patins **28**. Cette variante limite la largeur de l'ouverture **38**, mais évite la manœuvre de retournement pour le largage.

Les phases de lancement et de décollage du drone peuvent être commandées depuis le véhicule automobile **12**, par un opérateur disposant d'une interface homme-machine de commande, reliée par connexion filaire ou sans fil à divers capteurs sur le véhicule automobile **12** (notamment un ou plusieurs des capteurs suivants : capteur de vitesse du véhicule automobile **12**, capteur de vitesse et de direction du vent apparent, capteurs de position de la rampe de lancement **20**) et sur le drone **14**, et à des actionneurs sur le mécanisme de verrouillage **77** et le drone **14** pour piloter ces derniers. Elle peut également être commandée à distance.

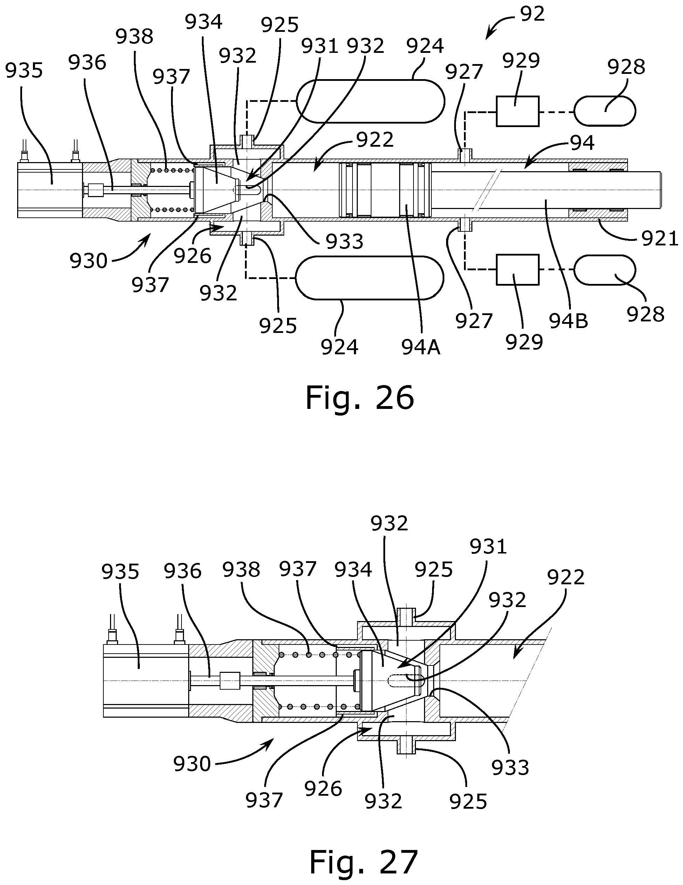

Sur les figures **26** à **38** sont illustrés divers modes de réalisation d'un actionneur **92** à accumulateur à énergie pneumatique qui peut être intégré à la catapulte **90** équipant la rampe de lancement **20** illustrée les figures **8** à **10**. Ces modes de réalisation ont en commun un organe de transmission **94** constitué par un piston **94A** lié à une tige **94B** destinée à être reliée au drone **14**, par exemple par l'intermédiaire de la tête **94C**, illustrée sur les figures **8** à **10**, venant en appui contre un épaulement arrière **28C** (visible sur les figures **4** et **7**) des patins **28**. Le piston **94A** coulisse de façon étanche dans un corps cylindrique **921** de l'actionneur, qui délimite une chambre à volume variable **922** et forme avec le piston **94** et la tige **94B** un vérin pneumatique.

Suivant un premier mode de réalisation illustré sur les figures **26** et **27**, la chambre à volume variable **922** communique avec un ou plusieurs accumulateurs pneumatiques sous pression **924** par l'intermédiaire d'une ou plusieurs lignes d'alimentation **925**, d'une chambre d'équilibrage **926** optionnelle et d'une vanne de modulation **930**. La vanne de modulation **930** comporte une chambre de pilotage **931** qui communique avec la chambre d'équilibrage **926** ou les lignes d'alimentation **925** par un ou plusieurs orifices de passage **932** et avec la chambre à volume variable **922** par un orifice d'alimentation **933**. Un modulateur mobile **934** est disposé dans la chambre de pilotage **931** et piloté par un actionneur de commande **935** de façon à être mobile entre une position d'ouverture maximale illustrée sur la figure **26** et une position d'ouverture minimale, illustrée sur la figure **27**. L'actionneur de commande **935** peut être pneumatique, hydraulique ou électrique.

Dans ce mode de réalisation, le modulateur mobile **934** est un tiroir modulateur mobile en translation entre les positions d'ouverture minimale et d'ouverture maximale, par exemple suivant un axe confondu avec l'axe de translation du piston **94A**. D'autres orientations de l'axe de translation du tiroir modulateur **934** par rapport à l'axe de translation du piston **94A** peuvent toutefois être envisagées. L'actionneur de commande **935** est linéaire et coaxial avec l'axe de translation du tiroir modulateur **934**, et relié à ce dernier par une tige **936**.

Le modulateur mobile **934**, en position d'ouverture minimale, constitue une perte de charge importante s'opposant au flux de gaz comprimé des accumulateurs pneumatiques **924** à la chambre à volume variable **922**. En s'écartant de la position d'ouverture minimale en direction de la position d'ouverture maximale, le modulateur mobile **934** s'efface et la perte de charge qu'il engendre diminue suivant une loi qui peut être linéaire ou non en fonction de la course parcourue.

On constate que le modulateur mobile **934** présente ici une forme tronconique correspondant à la forme tronconique de la partie de la chambre de pilotage **931** dans laquelle les orifices de passage **932** débouchent. Le cas échéant, la forme du modulateur mobile **934** ou la forme des orifices de passage **932** peuvent être choisies de façon à ce qu'une variation linéaire de la position du modulateur mobile **934** engendre une variation linéaire ou non linéaire de la perte de charge générée par le modulateur mobile **934**.

Bien que des passages **937** soient prévus entre la partie de la chambre de pilotage **931** dans laquelle débouchent les orifices de passage **932** et l'orifice d'alimentation **933** et la partie de la chambre de pilotage **931** située entre le modulateur mobile **934** et l'actionneur de commande **935**, le gaz sous pression présent dans la chambre de pilotage **931** induit sur le modulateur mobile **934** un effort différentiel sollicitant le modulateur mobile **934** vers la position d'ouverture maximale, effort qui est une fonction croissante de la pression régnant dans la chambre de pilotage **931**. De préférence, un ressort d'équilibrage **938** rappelle le modulateur mobile **935** vers la position d'ouverture minimale et équilibre au moins partiellement cet effort.

De façon préférentielle, l'actionneur de commande **935** permet au modulateur mobile **934** de prendre de façon stable toute position intermédiaire souhaitée entre la position d'ouverture minimale de la position d'ouverture maximale, de manière à générer une perte de charge variable entre les orifices de passage **932** et la chambre à volume variable **922**. Le cas échéant, l'actionneur de commande **935** peut comporter un mécanisme irréversible, au sens où aucune énergie de maintien n'est nécessaire pour maintenir l'actionneur de commande **935** et le modulateur mobile **934** dans une position quelconque entre la position d'ouverture minimale de la position d'ouverture maximale, et ceci quels que soit les efforts appliqués sur le modulateur mobile **934**.

L'objectif est d'obtenir dans la chambre à volume variable **922** une pression et un flux qui suivent une loi prédéterminée en fonction de la course du piston **94A** de la position armée de la figure **5** à la position de libération de la figure **7**, pour transférer au drone **14** l'énergie cinétique nécessaire au décollage, sans dépasser un seuil prédéterminé d'accélération instantanée admissible par la structure du drone **14** et par les équipements embarqués.

Pour ce faire, l'actionneur de commande peut être un actionneur à pilotage proportionnel, mettant en œuvre une boucle de régulation par rapport à un signal de consigne qui peut être par exemple un signal de position, de vitesse ou d'accélération du piston ou un signal de position, de vitesse ou d'accélération du modulateur mobile.

Alternativement, on peut prévoir que l'actionneur de commande **935** ait une course à vitesse constante entre deux positions de fin de course lors du lancement du drone **14**, la forme des orifices de passage **932** et du modulateur mobile **934** imposant la loi de débit recherchée.

De manière optionnelle, on peut prévoir un orifice d'alimentation auxiliaire **927** de la chambre à volume variable **922**, relié à une source de pression auxiliaire **928** par l'intermédiaire d'une électrovanne **929**, cette dernière étant fermée tant que le piston **94A** se trouve en amont de l'orifice d'alimentation auxiliaire **927** et s'ouvrant dès que le piston **94A** passe en aval de l'orifice d'alimentation auxiliaire **927** de manière à augmenter le flux pénétrant dans la chambre à volume variable **922** dans la dernière partie de sa course.

Lorsque le drone **14** est en position armée sur les figures **5** et **6**, verrouillé par le mécanisme de verrouillage **77** correspondant, et qu'est donné par un opérateur un ordre de lancement du drone, l'actionneur **935** de commande positionne le modulateur mobile **934** dans une position initiale souhaitée, alors que le mécanisme de verrouillage **77** est maintenu verrouillé. Le volume de la chambre à volume variable est minimal et la pression qui y règne est égale à la pression des accumulateurs pneumatiques **924**. Puis l'actionneur **80** provoque le retrait du pêne de verrouillage **78**, libérant l'équipage mobile **62**. La pression dans la chambre à volume variable **922** repousse le piston **94A** et un flux de gaz sous pression vient alimenter la chambre à volume variable **922** avec un débit contrôlé par le modulateur mobile **934** dont la position est continument adaptée pour que l'accélération de l'équipage mobile **62** reste en deçà d'un seuil prédéterminé. La phase de lancement dure moins d'une seconde, et l'actionneur de commande **935** est dimensionné pour avoir un temps de réponse adapté, permettant une modulation du débit pour réguler l'accélération du drone **14** en temps réel.

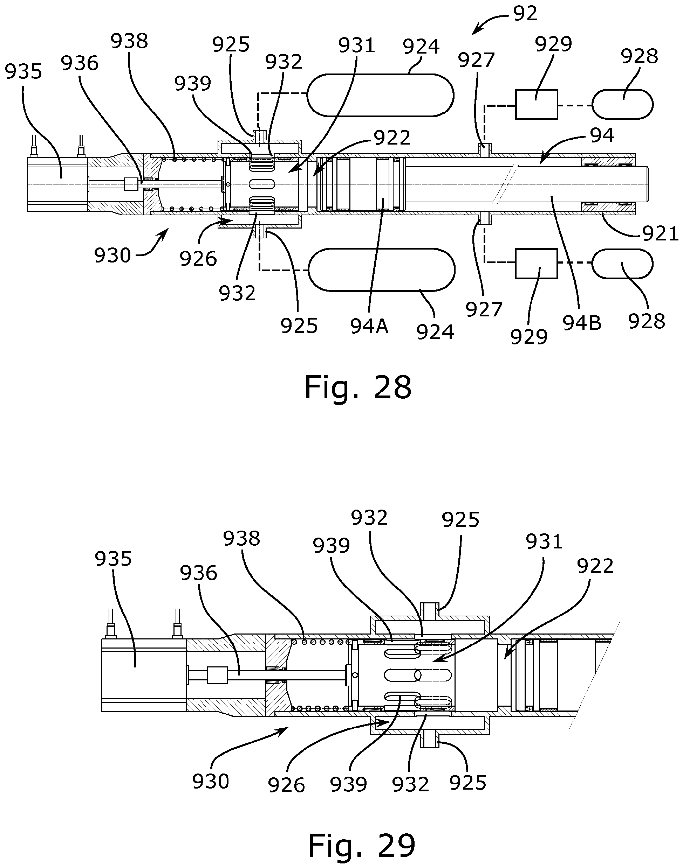

Le mode de réalisation des figures **28** et **29** diffère du précédent par la forme du modulateur mobile **934**, qui est ici un boisseau coulissant axialement dans la chambre de pilotage **931** et pourvu des trous de passage **939**. La chambre de pilotage **931** est largement ouverte sur la chambre à volume variable **922** et peut être considérée comme une partie de cette dernière. Le boisseau **934** est fixé à une tige **936** d'un actionneur linéaire de commande **935** qui permet de faire varier la position du boisseau **934** entre une position d'ouverture maximale illustrée sur la figure **28**, dans laquelle les trous de passage **939** sont largement alignés avec les orifices de passage **932** et une position d'ouverture minimale, voire de fermeture, illustrée sur la figure **29**, dans laquelle le recouvrement entre les trous de passage **939** et les orifices de passage **932** est minimal ou inexistant. La forme des trous de passage **939** et des orifices de passage **932** peut être adaptée pour déterminer une loi de variation de la section de passage en fonction de la course du boisseau **934** qui soit linéaire ou non linéaire.

Un ressort d'équilibrage **938** rappelle le boisseau **934** vers la position d'ouverture maximale de la figure **28**.

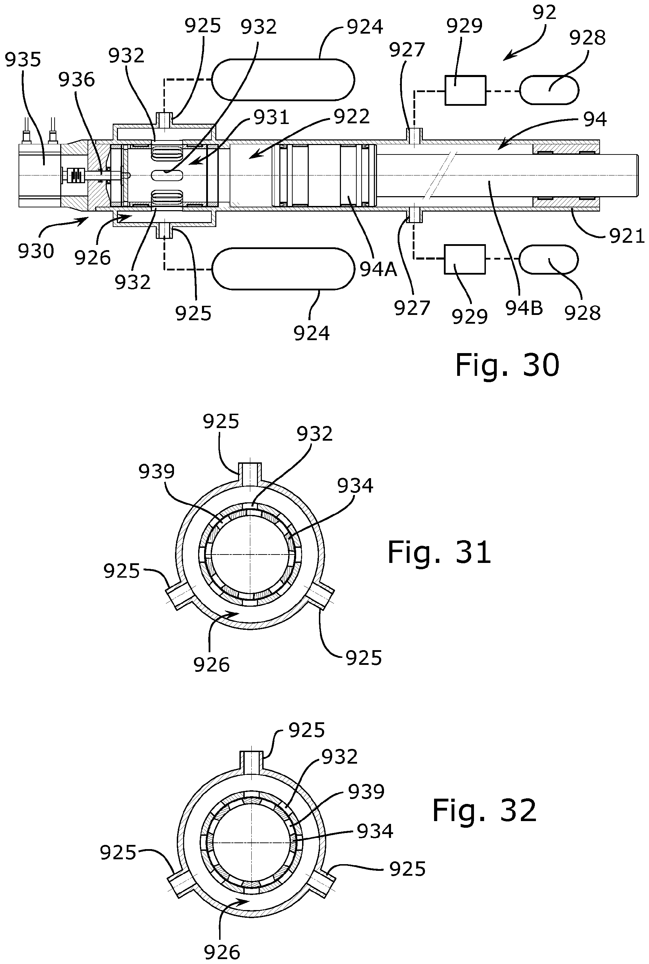

Le mode de réalisation des figures **30** à **32** diffère des précédents en ce que le modulateur mobile **934** est un boisseau rotatif entraîné par un actionneur de commande **935** rotatif, qui tourne d'un huitième de tour entre une position d'ouverture maximale illustrée sur les figures **30** et **31** et une position d'ouverture minimale illustrée sur la figure **32**, qui peut être le cas échéant une position de fermeture.

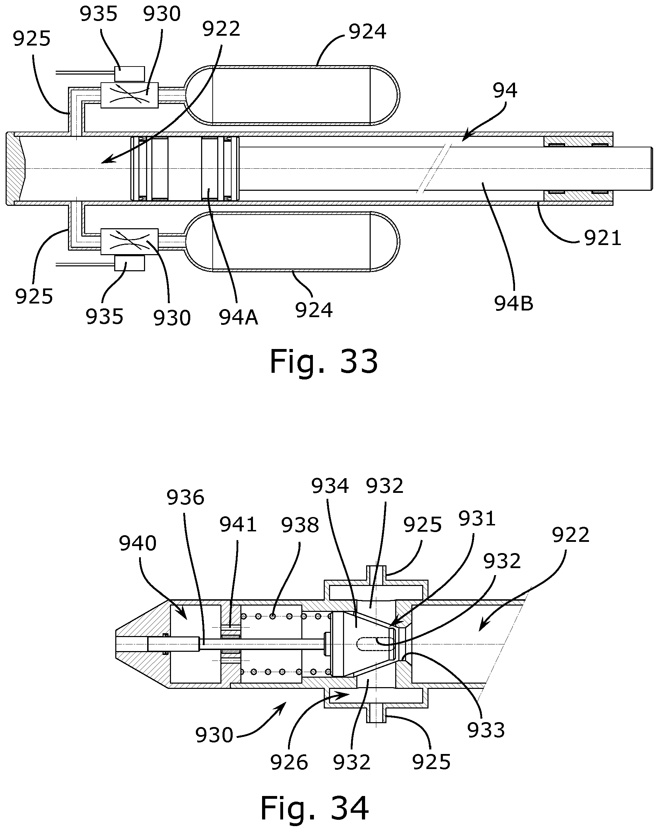

Sur la figure **33** a été illustrée une variante des modes de réalisation précédents, dans lequel chacune des lignes d'alimentation **925** débouche directement dans la chambre à volume variable **922** et est équipée d'une vanne de modulation **930,** qui peut être du type précédemment décrit ou une électrovanne du commerce. On peut alors envisager de faire fonctionner les vannes de modulation **930** simultanément ou successivement, et plus généralement, avec deux lois de comportement différentes pour optimiser le débit d'air comprimé remplissant la chambre à volume variable **922**.

Sur la figure **34** est illustrée une autre variante, dans laquelle la modulation du débit entrant dans la chambre à volume variable **922** est obtenue de manière passive, sans actionneur de commande **935**. Pour ce faire, la partie de la chambre de pilotage **931** opposée à la chambre de à volume variable **922** communique avec une chambre de modulation **940** par des trous calibrés **941**. On choisit alors le calibrage des trous calibrés **941**, le tarage du ressort **938**, les dimensions des orifices de passage **932** et la forme du modulateur mobile **934** de façon à ce le comportement dynamique du modulateur mobile durant la détente du piston soit conforme à la loi recherchée.

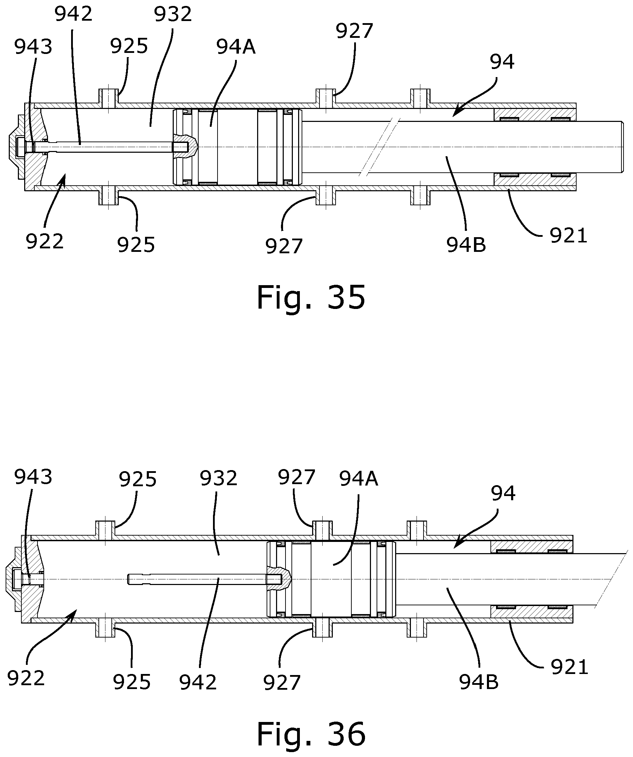

Sur les figures **35** et **36** a été illustré un accessoire qui est utilisable dans tous les modes de réalisation précédents et qui consiste en une tige de retenue **942** reliant le piston **94A** au corps cylindrique **921**, cette tige comportant une portion sécable **943** calibrée de façon à céder lorsque la pression exercée sur le piston **94A** dépasse un seuil prédéterminé, comme illustré sur la figure **36**.

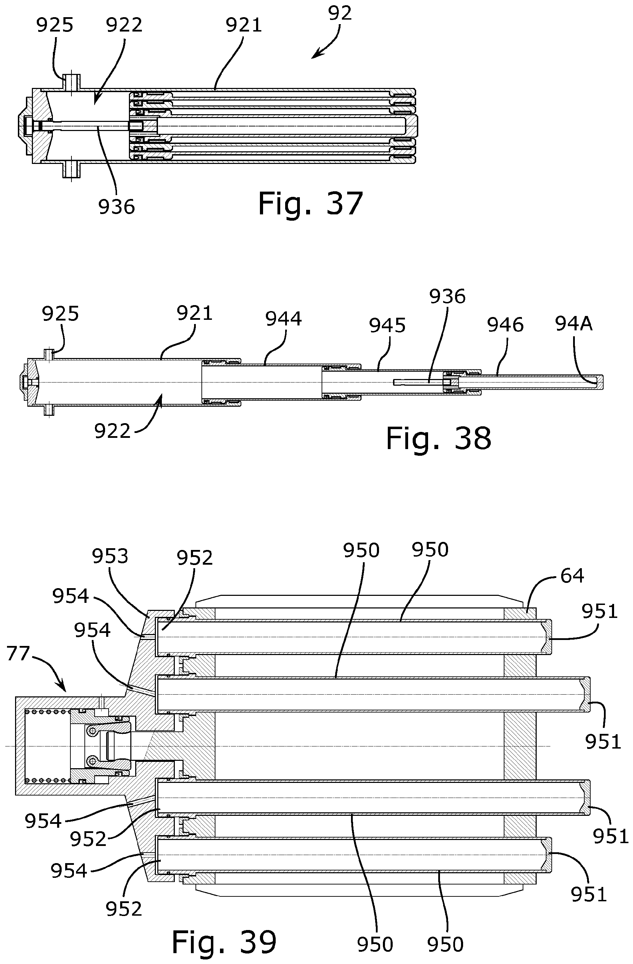

Sur les figures **37** et **38**, on a illustré une variante dans laquelle l'actionneur **92** de la catapulte **90** est un vérin télescopique, pour une compacité accrue, la chambre à volume variable **922** étant constituée par un ou plusieurs tubes emboîtés coaxiaux **944**, **945**, **946** de diamètres décroissants initialement positionnés dans un le corps cylindrique tubulaire **921**. Cette disposition peut être mise en œuvre dans toutes les variantes précédemment décrite de l'actionneur **92**.

Sur la figure **39** est illustrée une catapulte **90** qui est intégrée au châssis **64** de l'équipage mobile **62** tel qu'illustré sur les figures **14** à **18**. On fixe au châssis **64** des tubes **950** présentant à une extrémité un fond fermé **951**, et dont l'extrémité opposée **952** est ouverte et engagée de façon étanche dans un socle de maintien **953**. Des orifices de remplissage **954** permettent d'injecter dans les tubes **950** un fluide compressible, en l'occurrence de l'air sous pression. Le châssis **64** est maintenu dans la position armée par un mécanisme de verrouillage **77** à commande hydraulique ou pneumatique. Dès que le mécanisme de verrouillage **77** libère le châssis **64**, la pression exercée sur les fonds **951** des tubes **950** projette le châssis **64** et l'équipage mobile **62** portant le drone **14** sur la rampe de lancement **22.** Les tubes **950** peuvent avoir des contenances et des diamètres différents les uns des autres, et les extrémités ouvertes **952** peuvent également avoir des sections d'ouvertures différentes les unes des autres.

Dans tous les modes de réalisations de l'actionneur **92,** on prévoit un amortisseur de choc en fin de course de lancement, qui peut intégrer un bloc élastomère, un amortisseur à gaz, un ressort ou tout autre dispositif adapté.

Naturellement, les exemples représentés sur les figures et discutés ci-dessus ne sont donnés qu'à titre illustratif et non limitatif.

## Revendications

1. Ensemble (10) comportant un véhicule automobile de lancement (12) et un drone (14) ayant un fuselage (34) et une voilure (36), le véhicule automobile de lancement (12) étant apte à rouler sur une piste de lancement pour dépasser un seuil de vitesse donné par rapport à une masse d'air environnante, le véhicule automobile de lancement (12) étant pourvu d'une rampe de lancement (20) coopérant avec le drone (14) pour, dans une position de lancement et alors que le véhicule automobile roule sur la piste de lancement de manière à dépasser le seuil de vitesse donné par rapport à la masse d'air environnante, guider le drone (14) en translation depuis une position de départ dans une direction de lancement vers l'avant du véhicule automobile de lancement (12), **caractérisé en ce que** le drone (14) comporte un ou plusieurs réacteurs (30) et ne comporte pas de train d'atterrissage, la voilure (36) ayant une envergure satisfaisant à au moins une des conditions suivantes :
- l'envergure est supérieure à une largeur de voie du véhicule automobile de lancement (12),
- l'envergure est supérieure à deux mètres.

2. Ensemble (10) selon la revendication 1, **caractérisé en ce qu'**il comporte en outre au moins un mécanisme de verrouillage (77), mobile entre une position de verrouillage pour fixer le drone (14) par rapport à la rampe de lancement (20) dans une position armée, et une position de déverrouillage autorisant un mouvement du drone (14) par rapport à la rampe de lancement (20).

3. Ensemble (10) selon la revendication 2, **caractérisé en ce que** le dispositif d'accrochage est pourvu d'un déclencheur, de préférence mécanique, électromécanique ou pyrotechnique,

4. Ensemble (10) selon la revendication 3, **caractérisé en ce que** le d déclencheur est piloté pour ne pas se déclencher tant qu'une condition prédéterminée n'est pas réalisée, la condition prédéterminée étant l'une des conditions suivantes, ou une combinaison de plusieurs conditions parmi les conditions suivantes :
- le ou les réacteurs (30) du drone (14) délivrent une poussée au-dessus d'un seuil donné ;
- un effort exercé par le drone (14) sur le dispositif d'accrochage est inférieur à un seuil donné ;
- le véhicule automobile (12) a atteint ou dépassé le seuil de vitesse donné par rapport à la masse d'air environnante ;
- le véhicule automobile (12) a atteint ou dépassé un seuil de vitesse au seul donné ;
- la rampe de lancement (20) a une inclinaison donnée ou dans un secteur angulaire donné par rapport à l'horizontale ;
- la rampe de lancement (20) a une inclinaison donnée ou dans un secteur angulaire donné par rapport à l'assiette du véhicule automobile.

5. Ensemble (10) selon l'une quelconque des revendications précédentes, **caractérisé en ce que** le véhicule automobile de lancement (12) est pourvu d'un déflecteur (32) apte, dans une position fonctionnelle, à dévier un jet d'air expulsé par le ou les réacteurs (30) du drone (14), le déflecteur (30) étant de préférence mobile entre la position fonctionnelle et une position de transport pour réduire la traînée du véhicule automobile de lancement (12) dans l'air, le déflecteur (32) en position fonctionnelle déviant le jet d'air de préférence vers le haut.

6. Ensemble (10) selon l'une quelconque des revendications précédentes, **caractérisé en ce que** la rampe de lancement (20) est mobile entre la position lancement et une position de transport, pour réduire la traînée du véhicule automobile de lancement (12) dans l'air.

7. Ensemble (10) selon la revendication 6, **caractérisé en ce que** la rampe de lancement (20) est positionnée sur un toit (18) du véhicule automobile de lancement (12), qui présente de préférence un capot arrière incliné (25) permettant à une partie arrière en porte-à-faux de la rampe de lancement (20) de s'abaisser lorsque la rampe de lancement (20) passe de la position de transport à la position de lancement.

8. Ensemble (10) selon la revendication 6 ou la revendication 7, **caractérisé en ce qu'**un passage de la position de transport à la position de lancement se traduit par une inclinaison de la rampe de lancement (20) et/ou une extension de la rampe de lancement (20).

9. Ensemble (10) selon l'une quelconque des revendications 1 à 8, **caractérisé en ce que** le drone (14) est pourvu de patins (28) pour glisser sur la rampe de lancement (20), notamment sur des rails (22) ou dans des glissières (22) de la rampe de lancement (20).

10. Ensemble (10) selon l'une quelconque des revendications 1 à 8, **caractérisé en ce qu'**il comporte en outre un équipage mobile (62) guidé en translation le long de la rampe de lancement (20), et des moyens pour solidariser le drone (14) à l'équipage mobile (62) jusqu'à ce que le drone (14) arrive dans une position de décollage par rapport à la rampe de lancement (20), et libérer le drone (14) de l'équipage mobile (62) lorsque le drone (14) atteint la position de décollage.

11. Ensemble (10) selon l'une quelconque des revendications précédentes, **caractérisé en ce que** le drone (14) est équipé d'un parachute de récupération (52).

12. Ensemble (10) selon l'une quelconque des revendications précédentes, **caractérisé en ce que** la rampe de lancement (20) est équipée d'un accumulateur d'énergie (92) apte à libérer de façon impulsive une énergie préalablement accumulée pour catapulter le drone (10).

13. Procédé de transport et de largage d'une charge (40), comportant un lancement d'un drone (14) porteur de la charge (40), puis un vol du drone (14) jusqu'à une zone de largage (46), suivi d'un largage de la charge (40) depuis le drone (14) en vol, puis d'un vol du drone (14) jusqu'à une zone de récupération (50), **caractérisé en ce que** pour le lancement, un véhicule automobile de lancement (12) portant le drone (14) roule sur une piste de lancement de manière à dépasser un seuil de vitesse donné par rapport à une masse d'air environnante, et le drone (14) est guidé par une rampe de lancement (20) équipant le véhicule automobile de lancement (12) depuis une position de départ dans une direction de lancement vers l'avant du véhicule automobile de lancement, le drone (14) est propulsé, durant le lancement et au moins une partie du vol vers la zone de largage et/ou du vol jusqu'à la zone de récupération au moins partiellement par un ou plusieurs réacteurs (30) du drone (14), et le drone (10) ayant atteint la zone de récupération déploie un parachute de récupération (52), et se pose sur aire de récupération sans train d'atterrissage, le drone présente un fuselage et une voilure, l'une des conditions suivantes étant réalisées :
- la voilure a une envergure supérieure à une largeur de voie du véhicule automobile de lancement.
- le drone a une envergure supérieure à 2 mètres.

14. Procédé de transport et de largage d'une charge (40) selon la revendication 13, **caractérisé en ce que** le largage de la charge (40) comporte un retournement du drone (14) sur le dos, puis, par gravité, une sortie de la charge (40) d'une cavité (38) du drone (40) volant sur le dos, puis, de façon préférentielle, un déploiement d'un parachute (44) de ralentissement de la charge (40) en chute libre.

## Patentansprüche

1. Anordnung (10), die einen Trägerkraftfahrzeug (12) und eine Drohne (14) umfasst, die einen Rumpf (34) und ein Tragwerk (36) aufweist, wobei der Trägerkraftfahrzeug (12) geeignet ist, auf einer Startbahn zu rollen, um einen gegebenen Geschwindigkeitsschwellenwert in Bezug auf eine Umgebungsluftmasse zu überschreiten, wobei der Trägerkraftfahrzeug (12) mit einer Startrampe (20) versehen ist, die mit der Drohne (14) zusammenwirkt, um die Drohne (14) in einer Startposition und während das Kraftfahrzeug auf der Startbahn rollt, so dass der gegebene Geschwindigkeitsschwellenwert in Bezug auf eine Umgebungsluftmasse überschritten wird, translatorisch von einer Ausgangsposition in einer Startrichtung zu der Vorderseite des Trägerkraftfahrzeugs (12) zu führen, **dadurch gekennzeichnet, dass** die Drohne (14) ein oder mehrere Düsentriebwerke (30) umfasst und kein Fahrwerk umfasst, wobei das Tragwerk (36) eine Spannweite aufweist, die wenigstens eine der folgenden Bedingungen erfüllt:
- die Spannweite ist größer als eine Spurweite des Trägerkraftfahrzeug (12),
- die Spannweite ist größer als zwei Meter.

2. Anordnung (10) nach Anspruch 1, **dadurch gekennzeichnet, dass** sie ferner wenigstens einen Verriegelungsmechanismus (77) umfasst, der zwischen einer Verriegelungsposition, um die Drohne (14) bezüglich der Startrampe (20) in einer gespannten Position zu fixieren, und einer Entriegelungsposition bewegbar ist, die eine Bewegung der Drohne (14) an der Startrampe (20) zulässt.

3. Anordnung (10) nach Anspruch 2, **dadurch gekennzeichnet, dass** die Ankopplungsvorrichtung mit einem Auslöser versehen ist, der bevorzugt mechanisch, elektromechanisch oder pyrotechnisch ist.

4. Anordnung (10) nach Anspruch 3, **dadurch gekennzeichnet, dass** der Auslöser gesteuert wird, um nicht auszulösen, bis eine vorbestimmte Bedingung eingetroffen ist, wobei die vorbestimmte Bedingung eine der folgenden Bedingungen oder eine Kombination von mehreren Bedingungen aus den folgenden Bedingungen ist:
- das Düsentriebwerk oder die Düsentriebwerke (30) der Drohne (14) liefern Schub oberhalb eines gegebenen Schwellenwerts;
- eine durch die Drohne (14) auf die Ankopplungsvorrichtung ausgeübte Kraft ist kleiner als ein gegebener Schwellenwert;
- das Kraftfahrzeug (12) hat den gegebenen Geschwindigkeitsschwellenwert in Bezug auf die Umgebungsluftmasse erreicht oder überschritten;
- das Kraftfahrzeug (12) hat einen gegebenen Geschwindigkeitsschwellenwert zum Boden erreicht oder überschritten;
- die Startrampe (20) weist eine gegebene oder in einem gegebenen Winkelbereich in Bezug auf die Horizontale gegebene Neigung auf;
- die Startrampe (20) weist eine gegebene oder in einem Winkelbereich in Bezug auf den Nickwinkel des Kraftfahrzeugs gegebene Neigung auf.

5. Anordnung (10) nach einem der vorhergehenden Ansprüche, **dadurch gekennzeichnet, dass** der Trägerkraftfahrzeug (12) mit einer Ablenkplatte (32) versehen ist, die geeignet ist, in einer Betriebsposition einen Luftstrahl abzulenken, der durch das oder die Düsentriebwerk(e) (30) der Drohne (14) ausgestoßen wird, wobei die Ablenkplatte (30) bevorzugt zwischen der Betriebsposition und einer Transportposition bewegbar ist, um den Fahrtwiderstand des Trägerkraftfahrzeugs (12) in der Luft zu verringern, wobei die Ablenkplatte (32) in der Betriebsposition den Luftstrahl bevorzugt nach oben ablenkt.

6. Anordnung (10) nach einem der vorhergehenden Ansprüche, **dadurch gekennzeichnet, dass** die Startrampe (20) zwischen der Startposition und einer Transportposition bewegbar ist, um den Fahrtwiderstand des Trägerkraftfahrzeugs (12) in der Luft zu verringern.

7. Anordnung (10) nach Anspruch 6, **dadurch gekennzeichnet, dass** die Startrampe (20) auf einem Dach (18) des Trägerkraftfahrzeugs (12) positioniert ist, das bevorzugt eine geneigte hintere Haube (25) vorweist, die es einem hinteren Teil an einer Vorkragung der Startrampe (20) ermöglicht, sich zu senken, wenn die Startrampe (20) von der Transportposition in die Startposition übergeht.

8. Anordnung (10) nach Anspruch 6 oder 7, **dadurch gekennzeichnet, dass** sich ein Übergang von der Transportposition in die Startposition durch eine Neigung der Startrampe (20) und/oder eine Verlängerung der Startrampe (20) äußert.

9. Anordnung (10) nach einem der Ansprüche 1 bis 8, **dadurch gekennzeichnet, dass** die Drohne (14) mit Kufen (28) versehen ist, um auf der Startrampe (20) zu gleiten, insbesondere auf Schienen (22) oder in Gleitbahnen (22) der Startrampe (20).

10. Anordnung (10) nach einem der Ansprüche 1 bis 8, **dadurch gekennzeichnet, dass** sie ferner bewegliche Teile (62) umfasst, die entlang der Startrampe (20) translatorisch geführt werden, und Mittel zum Befestigen der Drohne (14) an den beweglichen Teilen (62), bis die Drohne (14) bezüglich der Startrampe (20) in eine Abflugposition kommt, und zum Freigeben der Drohne (14) von den beweglichen Teilen (62), wenn die Drohne (14) die Abflugposition erreicht.

11. Anordnung (10) nach einem der vorhergehenden Ansprüche, **dadurch gekennzeichnet, dass** die Drohne (14) mit einem Bergungsfallschirm (52) ausgestattet ist.

12. Anordnung (10) nach einem der vorhergehenden Ansprüche, **dadurch gekennzeichnet, dass** die Startrampe (20) mit einem Energiespeicher (92) ausgestattet ist, der geeignet ist, zuvor gespeicherte Energie pulsweise abzugeben, um die Drohne (10) zu katapultieren.

13. Verfahren zum Transportieren und Abwerfen einer Last (40), das das Starten einer Drohne (14), die die Last (40) trägt, dann ein Fliegen der Drohne (14) bis zu einem Abwurfbereich (46), gefolgt von einem Abwerfen der Last (40) von der Drohne (14) im Flug, dann ein Fliegen der Drohne (14) bis zu einem Bergungsbereich (50) umfasst, **dadurch gekennzeichnet, dass** für den Start ein Trägerkraftfahrzeug (12), das die Drohne (14) trägt, auf einer Startbahn rollt, um einen gegebenen Geschwindigkeitsschwellenwert in Bezug auf eine Umgebungsluftmasse zu überschreiten, und die Drohne (14) durch eine Startrampe (20), mit der das Trägerkraftfahrzeug (12) ausgerüstet ist, von einer Ausgangsposition in einer Vorwärtsstartrichtung des Trägerkraftfahrzeugs geführt wird, die Drohne (14) während des Starts und wenigstens eines Teils des Flugs zu dem Abwurfbereich und/oder des Flugs bis zu dem Bergungsbereich wenigstens teilweise durch ein oder mehrere Düsentriebwerke (30) der Drohne (14) angetrieben wird, und die Drohne (10) nach Erreichen des Bergungsbereichs einen Bergungsfallschirm (52) entfaltet und ohne Fahrwerk auf dem Bergungsgebiet landet, die Drohne einen Rumpf und ein Tragwerk vorweist, wobei eine der folgenden Bedingungen eingetroffen ist:
- das Tragwerk weist eine Spannweite auf, die größer als eine Spurweite des Trägerkraftfahrzeugs ist.
- die Drohne weist eine Spannweite von größer als 2 Meter auf.

14. Verfahren zum Transportieren und Abwerfen einer Last (40) nach Anspruch 13, **dadurch gekennzeichnet, dass** das Abwerfen der Last (40) ein Umkehren der Drohne (14) auf ihren Rücken und dann, durch die Schwerkraft, ein Verlassen der Last (40) eines Hohlraums (38) der auf dem Rücken fliegenden Drohne (40), dann bevorzugterweise ein Entfalten eines Fallschirms (44) zum Verlangsamen der Last (40) im freien Fall umfasst.

## Claims

1. Assembly (10) comprising a launch motor vehicle (12) and a drone (14) that has a fuselage (34) and wings (36), the launch motor vehicle (12) being capable of traveling on a launch track so as to exceed a given speed threshold relative to a surrounding air mass, the launch motor vehicle (12) being provided with a launching ramp (20) which engages with the drone (14) in order, in a launch position and while the motor vehicle is traveling on the launch track so as to exceed the given speed threshold relative to the surrounding air mass, to guide the drone (14) in translation from a starting position in a launch direction toward the front of the launch motor vehicle (12), **characterized in that** the drone (14) comprises one or more jet engines (30) and does not comprise a landing gear, the wings (36) having a wingspan that fulfils at least one of the following conditions:
- the wingspan is greater than a lane width of the launch motor vehicle (12),
- the wingspan is greater than two meters.

2. Assembly (10) according to claim 1, **characterized in that** it further comprises at least one locking mechanism (77) which is movable between a locking position for securing the drone (14) relative to the launching ramp (20) in a cocked position, and an unlocking position allowing movement of the drone (14) relative to the launching ramp (20).

3. Assembly (10) according to claim 2, **characterized in that** the attachment device is provided with a trigger, preferably a mechanical, electromechanical or pyrotechnic trigger,

4. Assembly (10) according to claim 3, **characterized in that** the trigger is controlled so as not to trigger until a predetermined condition is fulfilled, the predetermined condition being one of the following conditions, or a combination of a plurality of conditions from the following conditions:
- the jet engine or jet engines (30) of the drone (14) deliver thrust above a given threshold;
- a force exerted by the drone (14) on the attachment device is less than a given threshold;
- the motor vehicle (12) has reached or exceeded the given speed threshold relative to the surrounding air mass;
- the motor vehicle (12) has reached or exceeded a given ground speed threshold;
- the launching ramp (20) has a given slope or a slope in a given angular sector relative to the horizontal;
- the launching ramp (20) has a given slope or a slope in a given angular sector relative to the attitude of the motor vehicle.

5. Assembly (10) according to any of the preceding claims, **characterized in that** the launch motor vehicle (12) is provided with a deflector (32) that is capable, in an operational position, of deflecting a jet of air expelled by the jet engine or jet engines (30) of the drone (14), the deflector (30) preferably being movable between the operational position and a transport position so as to reduce the drag of the launch motor vehicle (12) in the air, the deflector (32) preferably deflecting the jet of air upward in the operational position.

6. Assembly (10) according to any of the preceding claims, **characterized in that** the launching ramp (20) is movable between the launch position and a transport position so as to reduce the drag of the launch motor vehicle (12) in the air.

7. Assembly (10) according to claim 6, **characterized in that** the launching ramp (20) is positioned on a roof (18) of the launch motor vehicle (12), which preferably has an inclined rear cover (25) allowing a cantilevered rear portion of the launching ramp (20) to lower when the launching ramp (20) moves from the transport position to the launch position.

8. Assembly (10) according to either claim 6 or claim 7, **characterized in that** a movement from the transport position to the launch position results in a slope of the launching ramp (20) and/or an extension of the launching ramp (20).

9. Assembly (10) according to any of claims 1 to 8, **characterized in that** the drone (14) is provided with skids (28) for sliding on the launching ramp (20), in particular on rails (22) or in slideways (22) of the launching ramp (20).

10. Assembly (10) according to any of claims 1 to 8, **characterized in that** it further comprises a moving part (62) which is guided in translation along the launching ramp (20), and means for securing the drone (14) to the moving part (62) until the drone (14) arrives at a take-off position relative to the launching ramp (20), and for releasing the drone (14) from the moving part (62) when the drone (14) reaches the take-off position.

11. Assembly (10) according to any of the preceding claims, **characterized in that** the drone (14) is equipped with a recovery parachute (52).

12. Assembly (10) according to any of the preceding claims, **characterized in that** the launching ramp (20) is equipped with an energy accumulator (92) capable of impulsively releasing previously accumulated energy in order to catapult the drone (10).

13. Method for transporting and dropping a load (40), comprising launching a drone (14) carrying the load (40), then flying the drone (14) to a drop zone (46), followed by dropping the load (40) from the drone (14) in flight, then flying the drone (14) to a recovery zone (50), **characterized in that**, for the launch, a launch motor vehicle (12) carrying the drone (14) travels on a launch track so as to exceed a given speed threshold relative to a surrounding air mass, and the drone (14) is guided, by a launching ramp (20) provided on the launch motor vehicle (12), from a starting position in a launch direction toward the front of the launch motor vehicle, the drone (14) is propelled, during the launch and at least some of the flight to the drop zone and/or of the flight to the recovery zone, at least in part by one or more jet engines (30) of the drone (14), and, the drone (10) having reached the recovery zone, deploys a recovery parachute (52), and lands in the recovery area without a landing gear, and the drone has a fuselage and wings, one of the following conditions being fulfilled:
- the wings have a wingspan greater than a lane width of the launch motor vehicle; and
- the drone has a wingspan of greater than 2 meters.

14. Method for transporting and dropping a load (40) according to claim 13, **characterized in that** the dropping of the load (40) comprises a rollover of the drone (14) onto its back, then, by gravity, an exit of the load (40) from a cavity (38) of the drone (40) flying on its back, then, preferably, deployment of a parachute (44) for slowing down the load (40) in free fall.
